# EUROPÄISCHE PATENTSCHRIFT

(11) **EP 2 003 342 B1**
(45) Veröffentlichungstag und Bekanntmachung des Hinweises auf die Patenterteilung: **21.11.2018**
(21) Anmeldenummer: 08009333.9
(22) Anmeldetag: 21.05.2008
(51) Int. Cl.: F16C 32/04, F04D 19/04, F04D 27/02, F04D 29/058

(54) **Verfahren zum Betreiben einer Anordnung mit Vakuumpumpe und Anordnung mit einer Vakuumpumpe**
Method for operating an assembly with vacuum pump and assembly with a vacuum pump
Procédé de fonctionnement d'un agencement doté d'une pompe à vide et agencement doté d'une pompe à vide

(30) Priorität: 15.06.2007 DE 102007027711
(43) Veröffentlichungstag der Anmeldung: 17.12.2008
(73) Patentinhaber: PFEIFFER VACUUM GMBH, 35614 Asslar (DE)
(72) Erfinder: Bernhardt, Helmut, 35584 Wetzlar (DE)
(74) Vertreter: Manitz Finsterwald Patentanwälte PartmbB

(56) Entgegenhaltungen:
- JP-A- H08 338 393
- JP-A- 2003 156 100
- JP-A- 2005 036 839
- US-A1- 2003 161 733

## Beschreibung

Die Erfindung betrifft ein Verfahren zum Betreiben einer Anordnung mit Vakuumpumpe und eine Anordnung mit Vakuumpumpe nach dem jeweiligen Oberbegriff unabhängigen Ansprüche.

Vakuumpumpen mit schnelldrehenden Rotoren, insbesondere solche nach Bauart von Gaede und Becker, haben aufgrund der Reinheit des erzeugten Hochvakuums geholfen, neue Technologiefelder beispielsweise in der Halbleiterphysik zu erschließen. Die Entwicklung führt dabei zu immer kleineren Bauteilstrukturen, die erzeugt oder untersucht werden müssen. Dies bedeutet, dass die Rezipienten, in denen diese Aufgaben gelöst werden, immer geringeren mechanischen Beeinträchtigungen ausgesetzt sein dürfen. Solche Beeinträchtigungen sind beispielsweise die Schwingungen, die die Vakuumpumpe aufgrund der schnellen Drehung des Rotors erzeugen. Obwohl Vakuumpumpen, in denen der Rotor nach magnetischen Wirkprinzipien gelagert ist, weniger Schwingungen erzeugen, ist festzustellen, dass die Schwingungen für heutige Anforderungen oftmals zu stark sind.

Verschiedene Lösungen werden im Stand der Technik vorgeschlagen.

Eine Lösung ist die Verwendung eines sogenannten Dämpfungskörpers. Dabei handelt es sich um ein zwischen Vakuumpumpe und Rezipienten angeordnetes Bauteil, beispielsweise nach EP 1711 711 A1. Nachteil dieser Lösung ist zum einen, dass der Dämpfungskörper nur bei hohen Frequenzen wirkt. Gerade bei niedrigen Frequenzen ist die Dämpfung aber besonders wichtig, da mechanische Resonanzen (im Rezipienten, z. B. Probenhalter) in der Regel niedrig sind. Zum anderen ist die Wirkung in Bezug auf die Frequenz nach unten hin begrenzt, da die Schwingungsübertragungsfunktion perfekt wäre, wenn die Steifigkeit des Dämpfungskörpers gegen Null ginge. Dies ist jedoch nicht möglich, da die durch den Atmosphärendruck erzeugte Kraft aufgenommen werden muss. Ein zwischen Rezipient und Vakuumpumpe angeordnetes Bauteil erzeugt einen ungern in Kauf genommenen Leitwertverlust. Überdies ist eine zusätzliche Sicherung der Pumpe erforderlich, da im Falle eines Kontakts von Rotor und Stator auftretende Kräfte nicht vom Dämpfungskörper gehalten werden können.

Die DE 32 39 328 A1 schlägt eine Abschwächung innerhalb der Pumpe durch weiche Aufhängung des Lagerstators von Permanentmagnetlagern vor. Dieses Prinzip wird in der EP 1 118 774 A1 auch zur Aufhängung eines Gehäuseteils benutzt, in welchem ein aktives Magnetlager angeordnet ist. Dieser Aufbau weist eine ähnliche Frequenzabhängigkeit wie ein externer Dämpfungskörper auf, so dass die oben in diesem Zusammenhang genannten Nachteile auch für diese Lösung gelten. Ein weiterer Nachteil ist, dass die weiche Aufhängung ein zusätzliches Radialspiel erzeugt. Dies bedeutet entweder eine Vergrößerung des effektiven Fanglagerspiels, was bei während des Fanglagerlaufs entstehenden Kräften nachteilig ist, oder die Notwendigkeit zur Verringerung des Spiels bis zum ersten Fanglagerkontakt. Daraus ergibt sich eine geringere Robustheit, da ein Ereignis zur Herbeiführung eines Fanglagerkontaktes bei diesem Aufbau schwächer ist. Außerdem geht mit dieser Lösung in der Regel ein hoher mechanischer Aufwand einher, da meist Beweglichkeit in radialer Richtung bei möglichst unendlicher Steifigkeit in axialer Richtung realisiert werden muss.

Aus der US 2003/161733 A1 sind ein Verfahren und eine Anordnung mit Vakuumpumpe gemäß dem jeweiligen Oberbegriff der unabhängigen Ansprüche bekannt.

In der JP H08 338393 A sind ein ähnliches Verfahren und eine ähnliche Anordnung mit Vakuumpumpe beschrieben.

Aufgabe der Erfindung ist es, eine Vakuumpumpe mit Magnetlager vorzustellen, die weniger Vibrationen auf den Rezipienten überträgt, dabei einfach und kostengünstig herzustellen ist und die vorgenannten Nachteile vermeidet.

Diese Aufgabe wird gelöst durch ein Verfahren und durch eine Anordnung mit Vakuumpumpe mit den jeweiligen Merkmalen der unabhängigen Ansprüche. Die abhängigen Ansprüche geben vorteilhafte Weiterbildungen der Erfindung an.

Eine Absenkung der Vormagnetisierung bewirkt eine Verringerung der im Lager wirkenden Kräfte. Mechanische Schwingungen entstehen beispielsweise durch Elektronikrauschen, das vom Elektromagneten des Lagers in ungewollte Kraftänderungen umgesetzt wird. Das Elektronikrauschen entsteht unter anderem durch elektromagnetische Einstreuung in Leitungen oder durch Quantisierungsrauschen von Digital-Analog- und Analog-Digital-Wandlern. Bei abgesenkter Vormagnetisierung sind die Kräfte geringer, so dass sich das Rauschen nicht mehr so stark auswirkt und im Endeffekt die Entstehung von mechanischen Schwingungen deutlich verringert wird. Das Absenken erfolgt abhängig vom Schaltzustand eines Umschaltmittels. Dadurch erfolgt das Absenken nur dann, wenn der ruhige Lauf der Vakuumpumpe benötigt wird. In einer solchen Phase ist nicht mit großen Erschütterungen zu rechnen, die vom Magnetlager ausgeglichen werden müssen. Daher kann eine sehr starke Absenkung erfolgen, die weit unter dem normalen Wert liegt. Der normale Wert ist durch das bemessen, was das Magnetlager an Kräften bereitstellen muss, um Rotorbewegungen ausgleichen zu können. Durch das Absenken in einer ruhigen Phase wird dem Nachteil eines verringerten Vormagnetisierungsstroms begegnet. Dieser Nachteil ist, dass selbst für kleine Kraftänderungen höhere Stromänderungen benötigt werden. Diese Stromänderungen sind jedoch durch die Induktivität der Elektromagnete und die endliche Versorgungsspannung der sie speisenden Verstärker begrenzt. Das Umschaltmittel erlaubt damit eine möglichst tiefe Absenkung der Vormagnetisierung und ermöglicht dem Benutzer der Vakuumpumpe, gezielt in eine Betriebsart zu wechseln, in der möglichst wenige Schwingungen von der Vakuumpumpe erzeugt werden. Die Vakuumpumpe wird bewusst mit einem Wert für die Vormagnetisierung betrieben, der nach dem Stand der Technik als unzulässig gilt. Die Probleme, insbesondere die geringen möglichen Kraftänderungen, werden jedoch durch Vorsehen eines Umschaltmittels umgangen. Dieses Umschaltmittel erlaubt, den Betrieb mit geringer Vormagnetisierung auf einen zeitlichen Bereich zu begrenzen.

Erfindungsgemäß ist vorgesehen, die Änderung des Vormagnetisierungsstroms um einen Betrag vorzunehmen, der von der Einbaulage der Vakuumpumpe abhängt.

In einer Weiterbildung wird die zuvor verringerte Vormagnetisierung durch Änderung des Vormagnetisierungsstromes nach einer vorgewählten Zeitdauer erhöht. Die Verringerung der Vormagnetisierung wird so nur für die Länge eines Vorgangs durchgeführt, beispielsweise einer Messung oder Belichtung. Die Zeitdauer kann dabei frei wählbar sein. Es entfällt ein manueller Umschaltvorgang.

In einer Weiterbildung wird die Auslenkung des Rotors von einem Positionssensor überwacht und bei Überschreiten eines Grenzwertes der Auslenkung der Vormagnetisierungsstrom derart geändert, dass die Vormagnetisierung erhöht wird. Diese Maßnahme erhöht die Betriebssicherheit der Anordnung. Wird von dem Positionssensor eine Zunahme der Auslenkungen gemessen, spricht dies für einen Zustand der Anordnung, in dem mit noch größeren Auslenkungen zu rechnen ist. Die durch die Steuerelektronik in den Elektromagneten erzeugte Vormagnetisierung wird dann erhöht, so dass die durch eine Stromänderung erreichbaren Kraftänderungen wieder groß genug sind, auch größere Auslenkungen des Rotors beherrschen zu können.

In einer Weiterbildung wird der Vormagnetisierungsstrom in Form einer stetigen Funktion geändert. Dies vermeidet sprunghafte Änderungen, welche auf verschiedene Arten Schwingvorgänge auslösen können.

Das Magnetlager muss den Rotor wenigstens gegen die Schwerkraft abstützen können. Es muss dabei wenigstens die Kraft aufbringen, die der Komponente der Gewichtskraft des Rotors in Lagerkraftwirkrichtung entspricht.

Gemäß einer anderen Weiterbildung ist der Betrag der Änderung des Vormagnetisierungsstromes bei Lagerung des Rotors parallel zur Schwerkraftrichtung grösser als bei einer Anordnung senkrecht zu ihr. Dies gewährleistet, dass die Vakuumpumpe in jeder Lage eingebaut werden kann, wobei die Kraft einerseits immer zur Stützung gegen die Gewichtskraft ausreicht, andererseits so klein wie möglich ist.

Die erfindungsgemäße Anordnung mit Vakuumpumpe kann weitergebildet werden, indem das Umschaltmittel ein am Gehäuse der Steuerelektronik zugängliches Schaltelement umfasst. Hierdurch wird eine einfache Bedienbarkeit geschaffen.

In einer anderen Weiterbildung umfasst das Umschaltmittel eine elektronische Einheit, welche mit Vakuumpumpe oder Steuerelektronik verbindbar ist. Dies kann beispielsweise eine Handsteuereinheit sein. Es kann sich auch um einen Computer oder ein vergleichbares Gerät handeln.

In einer Weiterbildung weist das Magnetlager einen Permanentmagneten auf. Er erzeugt ein konstantes Magnetfeld zur Stützung des Rotors. Da dieses Magnetfeld eine Materialeigenschaft und konstant ist, gibt es bei der Erzeugung keine Quellen, die zu Schwingungen des Rotors und der Vakuumpumpe führen können.

In einer Weiterbildung weist die Anordnung Statusanzeigemittel auf, die anzeigen, wenn sich die Anordnung im Zustand mit geändertem Vormagnetisierungsstrom befindet. Hierdurch wird signalisiert, dass die Anordnung nicht starken Erschütterungen oder anderen mechanischen Störungen ausgesetzt werden darf.

Die Vorteile der Anordnung und des Verfahrens kommen besonders bei einer Vakuumpumpe zur Geltung, welche zwei aktive radiale und ein aktives axiales Magnetlager aufweist. Durch diese Magnetlager werden alle Freiheitsgrade unterstützt, so dass auf alle der besonders ruhige Lauf angewendet werden kann. Dies gibt in der Summe eine besonders geringe Erzeugung von Schwingungen durch die Vakuumpumpe.

Anhand eines Ausführungsbeispiels soll die Erfindung näher erläutert werden. Weitere Vorteile werden ebenfalls aufgezeigt. Es zeigen:
- Fig. 1:: Schnitt durch eine Anordnung mit einer Vakuumpumpe.
- Fig. 2:: Diagramm zur Veranschaulichung der Kraft-Strom-Kennlinie eines aktiv geregelten Magnetlagers.
- Fig. 3:: Darstellung des zeitlichen Verlaufs einiger Betriebsgrößen.

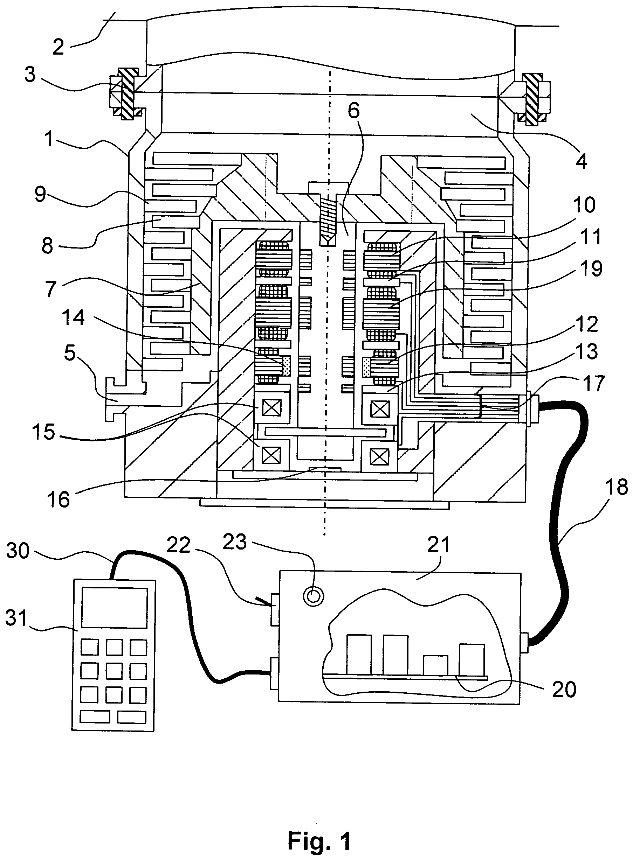

In Fig. 1 ist eine Anordnung mit einer Vakuumpumpe 1 dargestellt. Diese Vakuumpumpe ist mit Befestigungsmitteln 3 lösbar am Flansch eines Rezipienten 2 befestigt. Bei den gezeigten Befestigungsmitteln handelt es sich um Schrauben, es können jedoch auch Klammern und andere bekannte Mittel verwendet werden.

Gas wird durch einen Gaseinlass 4 hindurch angesaugt, in der Vakuumpumpe verdichtet und durch den Gasauslass 5 ausgestoßen. Innerhalb der Vakuumpumpe ist eine Rotorwelle 6 vorgesehen, die einen glockenförmigen Rotor 7 trägt. Auf diesem sind Rotorschaufeln 8 angeordnet. Diese sind in mehreren axial beabstandeten Ebenen angeordnet. Innerhalb der axialen Lücken befinden sich Statorschaufeln 9, die ebenfalls in axial beabstandeten Ebenen angeordnet sind. Durch schnelle Drehung des Rotors entsteht die Pumpwirkung. Die schnelle Drehung wird durch einen Antrieb 19 bewirkt.

Drehbar unterstützt wird die Rotorwelle von aktiven Magnetlagern. Im dargestellten Beispiel sind dies zwei aktive Radialmagnetlager und ein aktives Axialmagnetlager. In Richtung desjenigen Wellenendes, an welchem die Rotorwelle mit dem Rotor verbunden ist, befindet sich ein erster Elektromagnet 10 des ersten Radiallagers. Ein solches Radiallager weist in einer üblichen Bauform zwei Paare von Elektromagneten auf. Die Wirkrichtungen der Paare stehen jeweils senkrecht aufeinander und auf der Rotorwelle. Ihm folgt in Richtung auf das entgegengesetzte Wellenende ein erster Radialsensor 11. Es folgen in der genannten Reihenfolge der Motor, ein zweiter Elektromagnet 12 des zweiten Radiallagers und ein zweiter Radialsensor 13. Mit den Sensoren 11, 13 und 16 wird der Abstand zwischen ihrer inneren Umfangsfläche und der Rotorwelle gemessen. Durch die starre Verbindung mit dem Rotor ist mit den Sensoren gleichzeitig die Auslenkung des Rotors messbar. Das zweite Radiallager weist zudem einen Permanentmagnet 14 auf, der im Magnetkreis des zweiten Elektromagneten angeordnet ist. Er bewirkt eine permanentmagnetische Vorspannung dieses Magnetkreises. Der axiale Freiheitsgrad der Rotorwelle wird durch ein Axiallager gestützt. Dieses ist an jenem Wellenende angeordnet, welches dem Übergang zum glockenförmigen Rotor gegenüberliegt. Das Axiallager weist Axialelektromagnete 15 und einen Axialsensor 16 auf. Motor und Elektromagneten der radialen und axialen Magnetlager werden durch Versorgungsleitungen 17 mit den notwendigen elektrischen Spannungen und Strömen versorgt. Wahlweise kann ein Teil der Magnetlager voll permanentmagnetisch ausgeführt sein. Anstelle eines glockenförmigen Rotors kann eine Bauart mit auf der Welle befestigten Rotorscheiben gewählt werden. Der Rotor kann zudem Pumpabschnitte mit unterschiedlichen Wirkungsprinzipien aufweisen, beispielsweise Holweckstufen.

Ein vieladriges Versorgungskabel 18 verbindet eine Steuerelektronik 20 mit den Versorgungsleitungen 17 der Vakuumpumpe. Die Steuerelektronik erzeugt die notwendigen Ströme und Spannungen, um den Rotor gegen die Gewichtskraft in Schwebe zu halten und über den Motor in schnelle Drehung zu versetzen. Sie ist in einem Gehäuse 21 angeordnet. An dessen Oberfläche sind ein Umschaltmittel 22 und ein Statusanzeigemittel 23 vorgesehen. Das Umschaltmittel ist mit der Steuerelektronik 20 verbunden, so dass diese in Abhängigkeit vom Schaltzustand den Vormagnetisierungsstrom wenigstens eines der Lager stellt. Das Umschaltmittel ist im gezeigten Beispiel als Schalter ausgeführt. Das Statusanzeigemittel zeigt an, dass sich die Vakuumpumpe in einem Betriebszustand mit verringerter Vormagnetisierung befindet. Das Statusanzeigemittel ist im vorliegenden Beispiel als Leuchtdiode ausgeführt. Es kann sich um eine eigens für diesen Zweck vorgesehene Leuchtdiode handeln. Denkbar ist jedoch auch, dass eine andere, bereits vorgesehene Leuchtdiode verwendet wird. Dies kann beispielsweise die Betriebsanzeige sein, die im Normalzustand kontinuierlich leuchtet, während sie im Betriebszustand mit verringerter Vormagnetisierung blinkt.

Anstelle oder parallel zum Umschaltmittel 22 kann eine elektronische Einheit 31 über ein Verbindungskabel 30 mit der Steuerelektronik verbunden sein. Bei dieser Einheit kann es sich um ein Handgerät, einen tragbaren Computer oder eine über ein übliches Bussystem verbundene Steuereinheit handeln. Die Verbindung kann über das Verbindungskabel, über Funk oder über optische Datenübertragung erfolgen. Die Verbindung kann dauerhaft oder lösbar gestaltet sein. Insbesondere kann die elektronische Einheit weitere Funktionen haben, wie beispielsweise das Verändern von Betriebsparametern und ähnlichem. Der Betrag zur Änderung des Vormagnetisierungsstromes kann einer der Betriebsparameter sein. Ein anderer Betriebsparameter ist beispielsweise die Drehzahl.

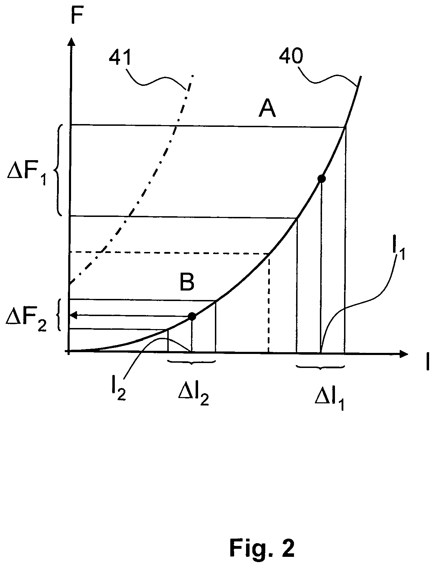

In Fig. 2 sind zwei Kraft-Strom-Kennlinien aktiver Magnetlager gezeigt. Die Kennlinie 40 ist die eines rein elektromagnetischen Magnetlagers, die Kennlinie 41 entspricht der eines mit Permanentmagneten vorgespannten Magnetlagers. Diese Kennlinie verläuft in guter Näherung parabelförmig. Dieser Verlauf ist für die Krafterzeugung durch ein Magnetlager wichtig. Im Folgenden werden zwei verschiedene auf der Kennlinie 40 liegende Arbeitspunkte verglichen.

Ein erster Arbeitspunkt ist definiert durch einen Vormagnetisierungsstrom I1. Ausgehend von diesem Vormagnetisierungsstrom werden Stromänderungen in einem Strombereich ΔI₁ durchgeführt. Diese Stromänderungen bewirken Kraftänderungen im Bereich ΔF₁. Mit diesen Kraftänderungen kann die Rotorposition beeinflusst und beispielsweise auf Störungen reagiert werden.

Ein zweiter Arbeitspunkt ist definiert durch einen Vormagnetisierungsstrom I₂. Wie bei dem zuvor gewählten Arbeitspunkt führen Stromänderungen zu Kraftänderungen. Um diesen Arbeitspunkt liegen die Ströme im Bereich ΔI₂, die sich ergebenden Kraftänderungen im Bereich ΔF₂. Es fällt auf, dass im zweiten Arbeitspunkt, der von einem niedrigeren Strom I₂ ausgeht, selbst mit gleich großen Stromänderungen, also ΔI₁ = ΔI₂, nur geringere Kraftänderungen bewirkt werden können.

Eine gestrichelte Linie grenzt zwei Gebiete voneinander ab. Das Gebiet A gibt den Teil der Kennlinie 40 an, in dem Magnetlager von Vakuumpumpen im Stand der Technik betrieben werden. Der Arbeitspunkt ist dabei so gewählt, dass mit einer Stromänderung jederzeit eine ausreichende Kraftänderung erzeugt werden kann, um Auslenkungen des Rotors zu begegnen. Die maximalen Auslenkungen sind dabei Erfahrungswerte des Herstellers der Vakuumpumpe. Solche Auslenkungen entstehen üblicherweise durch mechanische Einwirkungen wie zum Beispiel dem Schließen von mit dem Rezipienten verbundenen Schieberventilen und ähnlichem.

Den maximal möglichen durch die Steuerelektronik erzeugbaren Stromänderungen sind bauliche Grenzen gesetzt.

Das Gebiet B ist in dem unteren Bereich der Kennlinie 40 gelegen. Hier reichen die durch maximale Stromänderung erreichbaren Kraftänderungen nur noch dazu aus, kleinste Störungen zu kompensieren. Große Erschütterungen der Pumpe können nicht mehr oder nur noch durch Einsatz von Notlagern abgefangen werden. Durch Ändern des Schaltzustands des Umschaltmittels wird die Steuerelektronik veranlasst, den Arbeitspunkt aus dem Gebiet A in das Gebiet B zu verlegen. Für den Normalbetrieb der Vakuumpumpe, bei dem auch große Erschütterungen abgefangen werden müssen, sind die geringeren Kräfte und Kraftänderungen im Gebiet von Nachteil. Daher wird im Stand der Technik vom Betrieb in diesem Bereich abgesehen. Der Vorteil am Betrieb in diesem Gebiet ist jedoch, dass die geringeren Basiskräfte im Magnetlager eine geringe Schwingungsübertragung bewirken. Hinzu kommt auch, dass unvermeidliches Elektronikrauschen, welches ungewollte Stromänderungen bedingt, nur noch geringe ungewollte Kraftänderungen bewirkt. Dies trägt zur Absenkung der durch die Vakuumpumpe erzeugten und auf den Rezipienten übertragenen Schwingungen bei.

Magnetlager mit Permanentmagneten, welche innerhalb des Magnetkreises angeordnet sind, weisen eine Kraft-Strom-Kennlinie auf, die wie Kennlinie 41 in Fig. 2 verläuft. Die Vormagnetisierung setzt sich bei einem solchen Lager aus zwei Anteilen zusammen, von denen der eine permanentmagnetisch, der andere elektromagnetisch erzeugt ist. Oftmals werden solche Lager als permanentmagnetisch vorgespannt bezeichnet. Der elektromagnetische Anteil ist bestimmt durch die Grösse des Vormagnetisierungsstromes. Hierbei sind zwei Fälle zu unterscheiden. Im ersten Fall sind die Permanentmagnete derart ausgelegt, dass der Vormagnetisierungsstrom Null beträgt. Im zweiten Fall wird die Vormagnetisierung zum Teil mittels eines von Null verschiedenen Vormagnetisierungsstroms und zum anderen Teil mittels Permanentmagneten erzeugt. Die Kraft-Strom-Kennlinie des permanentmagnetisch vorgespannten Magnetlagers ist gegenüber der im Diagramm gezeigten nach links verschoben. Die Wahl der Arbeitspunktes erfolgt jedoch nach den gleichen Gesichtspunkten wie im Falle des rein elektromagnetischen Lagers. Der Arbeitspunkt im normalen Gebiet A kann dabei so gewählt sein, dass der Vormagnetisierungsstrom den Wert Null annimmt. Das Gebiet B ist dann so gelegen, dass ein Vormagnetisierungsstrom aufgewendet wird, um die permanentmagnetische Vorspannung zu kompensieren.

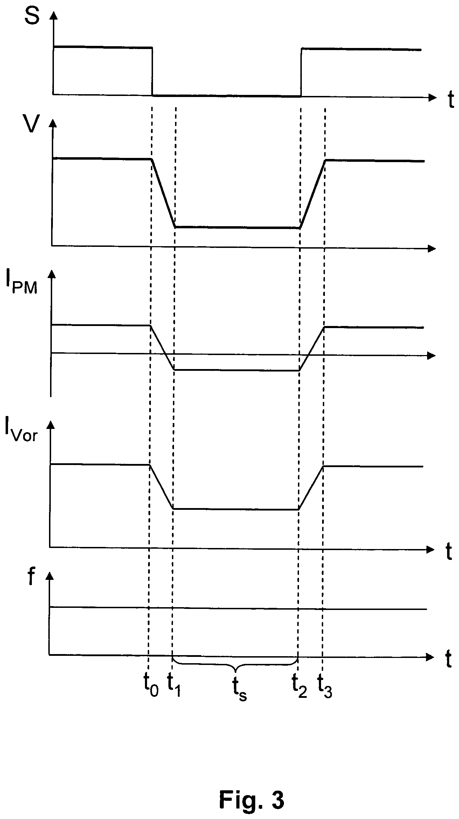

Der zeitliche Verlauf einiger Größen der Anordnung mit einer Vakuumpumpe ist in Fig. 3 gezeigt. Das oberste Diagramm zeigt den Schaltzustand S des Umschaltmittels. Darunter folgen in dieser Reihenfolge: Betrag der Vormagnetisierung V, Vormagnetisierungsstrom im Falle eines permanentmagnetisch unterstützten Lagers I_{PM}, Vormagnetisierungsstrom bei einem rein elektromagnetischen Lager I_{Vor} und die Drehzahl des Rotors f.

Zum Zeitpunkt t₀ ändert sich der Schaltzustand des Umschaltmittels. Dies kann beispielsweise durch Umlegen eines Schalters oder Senden eines Stellbefehls über eine Schnittstelle zur Steuerelektronik geschehen.

Zwischen den Zeitpunkten t₀ und t₁ wird von einem hohen Wert ausgehend eine stetige Änderung der Vormagnetisierung durchgeführt. Sie sinkt von einem ersten, höheren Wert auf einen zweiten, niedrigeren Wert ab. Bewirkt wird dies durch eine Änderung der Vormagnetisierungsströme. Bei einem permanentmagnetisch unterstützen Magnetlager ist die Änderung des Vormagnetisierungsstroms I_{PM} abhängig vom Verhältnis der Anteile aus permanentmagnetischer und durch einen Vormagnetisierungsstrom bewirkter Vormagnetisierung. Generell wird eine Absenkung des Vormagnetisierungsstromes vorgenommen. Die permanentmagnetischen Anteile müssen zur Absenkung der Vormagnetisierung durch den Vormagnetisierungsstrom kompensiert werden. Daraus kann sich ein Vorzeichenwechsel des Vormagnetisierungsstromes, wie in der Abbildung gezeigt, ergeben. Bei einem vollständig permanentmagnetisch vorgespannten Magnetlager ist I_{PM} vor dem Zeitpunkt t₀ und nach dem Zeitpunkt t₃ gleich Null. Der gezeigte Verlauf entspricht einem Magnetlager, welches nur zum Teil permanentmagnetisch vorgespannt ist, so dass der Vormagnetisierungsstrom I_{PM} auch vor dem Zeitpunkt t₀ und nach dem Zeitpunkt t₃ von Null verschieden ist und zwischen t₁ und t₂ ein anderes Vorzeichen aufweist. Im Falle eines rein elektromagnetischen Magnetlagers sinkt der Vormagnetisierungsstrom I_{Vor} von einem hohen Wert auf einen niedrigeren Wert ab. Eine vorteilhafte Zeitdauer zwischen den Zeitpunkten t₀ und t₁ beträgt wenige Zehntelsekunden bis einige Sekunden.

Zwischen den Zeitpunkten t₁ und t₂ behalten V, I_{PM} und I_{Vor} ihre Werte bei. Für die Zeitdauer t_{S} befindet sich die Vakuumpumpe nun in einem ruhigen Betriebszustand. Diese Zeitdauer kann von vorgewählter Länge sein. Eine Möglichkeit der Umsetzung ist, die Zeitdauer über einen beispielsweise in der Steuerelektronik abgelegten Betriebsparameter festzulegen.

Zum Zeitpunkt t₂ wird der Schaltzustand erneut geändert, er nimmt den ursprünglichen Zustand wieder an. Bis zum Zeitpunkt t₃ steigt nun die Vormagnetisierung wieder auf den Ursprungswert an. Dies wird bewirkt durch die Änderung des Vormagnetisierungsstromes in Form eines Absinkens von I_{PM} und Ansteigens von I_{Vor} auf den jeweiligen Ausgangswert.

Während der gesamten Zeitspanne, insbesondere zwischen t₀ und t₃, bleibt die Drehzahl des Rotors konstant. Dadurch bleibt das Saugvermögen der Vakuumpumpe unverändert, so dass zwar die Erzeugung von Schwingungen reduziert ist, jedoch keine Einbußen am erzeugten Vakuum in Kauf genommen werden müssen.

## Patentansprüche

1. Verfahren zum Betrieb einer Anordnung mit Vakuumpumpe (1), welche einen Rotor (7) und ein aktives Magnetlager enthält, wobei das Magnetlager einen Elektromagneten (10, 12, 15) aufweist, und mit einer Steuerelektronik (20) für das Magnetlager,
wobei ein den Elektromagneten durchfließender Vormagnetisierungsstrom des Magnetlagers in Abhängigkeit vom Schaltzustand eines Umschaltmittels (22) derart geändert wird, dass eine Verringerung der Vormagnetisierung bewirkt wird,
**dadurch gekennzeichnet,**
**dass** der Vormagnetisierungsstrom um einen Betrag geändert wird, der von der Einbaulage der Vakuumpumpe (1) abhängt.

2. Verfahren nach Anspruch 1,
**dadurch gekennzeichnet,**
**dass** nach einer vorgewählten Zeitdauer die zuvor verringerte Vormagnetisierung durch Änderung des Vormagnetisierungsstroms erhöht wird.

3. Verfahren nach einem der vorhergehenden Ansprüche,
**dadurch gekennzeichnet,**
**dass** die Auslenkung des Rotors (7) von einem Positionssensor (11, 13, 16) überwacht und bei Überschreiten eines Grenzwertes der Auslenkung der Vormagnetisierungsstrom derart geändert wird, dass die Vormagnetisierung erhöht wird.

4. Verfahren nach einem der vorhergehenden Ansprüche,
**dadurch gekennzeichnet,**
**dass** der Vormagnetisierungsstrom in Form einer stetigen Funktion geändert wird.

5. Verfahren nach einem der vorhergehenden Ansprüche,
**dadurch gekennzeichnet,**
**dass** der Vormagnetisierungsstrom um einen Betrag geändert wird, der bei senkrechter Anordnung der Achse des Lagers zur Schwerkraftrichtung grösser als bei einer parallelen Anordnung ist.

6. Anordnung mit Vakuumpumpe (1), in der wenigstens ein aktives Magnetlager angeordnet ist, welches einen Elektromagneten (10, 12, 15) und einen Positionssensor (11, 13, 16) aufweist,
wobei das Magnetlager mit einer Steuerelektronik (20) in Verbindung steht,
wobei ein Umschaltmittel (22) zur Beeinflussung der Vormagnetisierung mit der Steuerelektronik verbunden ist,
wobei ein den Elektromagneten (10, 12, 15) durchfließender Vormagnetisierungsstrom des Magnetlagers in Abhängigkeit vom Schaltzustand des Umschaltmittels (22) änderbar ist, um eine Verringerung der Vormagnetisierung zu bewirken,
**dadurch gekennzeichnet,**
**dass** die Steuerelektronik (20) den Vormagnetisierungsstrom um einen Betrag ändert, der von der Einbaulage der Vakuumpumpe (1) abhängt.

7. Anordnung nach Anspruch 6,
**dadurch gekennzeichnet,**
**dass** das Umschaltmittel (22) ein am Gehäuse (21) der Steuerelektronik zugängliches Schaltelement umfasst.

8. Anordnung nach Anspruch 6,
**dadurch gekennzeichnet,**
**dass** das Umschaltmittel (22) eine elektronische Einheit (31) umfasst, welche mit Vakuumpumpe oder Steuerelektronik verbindbar ist.

9. Anordnung nach einem der Ansprüche 6 bis 8,
**dadurch gekennzeichnet,**
**dass** das Magnetlager einen Permanentmagneten (14) aufweist, der eine Vormagnetisierung bewirkt.

10. Anordnung nach einem der Ansprüche 6 bis 9,
**dadurch gekennzeichnet,**
**dass** ein Statusanzeigemittel (23) vorgesehen ist, das den Zustand des geänderten Vormagnetisierungsstroms anzeigt.

11. Anordnung nach einem der Ansprüche 6 bis 10,
**dadurch gekennzeichnet,**
**dass** die Vakuumpumpe zwei aktive radiale Magnetlager mit je einem Elektromagneten (10, 12) und einem Radialsensoren (11, 13) und ein axiales Magnetlager mit einem Axialelektromagneten (15) und einem Axialsensor (16) aufweist.

## Claims

1. A method of operating an arrangement having a vacuum pump (1), which includes a rotor (7) and an active magnetic bearing, wherein the magnetic bearing has an electromagnet (10, 12, 15), and having control electronics (20) for the magnetic bearing,
wherein a pre-magnetizing current of the magnetic bearing flowing through the electromagnet is changed in dependence on the switching state of a switchover means (22) such that a reduction in the pre-magnetization is effected,
**characterized in that**
the pre-magnetizing current is changed by an amount which depends on an installation position of the vacuum pump (1).

2. A method in accordance with claim 1,
**characterized in that**
the previously reduced pre-magnetization is increased by changing the pre-magnetizing current after a pre-selected time period.

3. A method in accordance with one of the preceding claims,
**characterized in that**
the deflection of the rotor (7) is monitored by a position sensor (11, 13, 16); and **in that** the pre-magnetizing current is changed on an exceeding of a limit value of the deflection such that the pre-magnetization is increased.

4. A method in accordance with any one of the preceding claims,
**characterized in that**
the pre-magnetizing current is changed in the form of a continuous function.

5. A method in accordance with any one of the preceding claims,
**characterized in that**
the pre-magnetizing current is changed by an amount which is larger with a perpendicular arrangement of the axis of the bearing to the direction of gravity than with a parallel arrangement.

6. An arrangement having a vacuum pump (1) in which at least one active magnetic bearing is arranged which has an electromagnet (10, 12, 15) and a position sensor (11, 13, 16),
wherein the magnetic bearing is connected to control electronics (20);
wherein a switchover means (22) for influencing the pre-magnetization is connected to the control electronics; and
wherein a pre-magnetizing current of the magnetic bearing flowing through the electromagnet (10, 12, 15) can be changed in dependence on the switching state of the switchover means (22) in order to effect a reduction in the pre-magnetization,
**characterized in that**
the control electronics (20) change the pre-magnetizing current by an amount which depends on the installation position of the vacuum pump (1).

7. An arrangement in accordance with claim 6,
**characterized in that**
the switchover means (22) comprises a switching element accessible at a housing (21) of the control electronics.

8. An arrangement in accordance with claim 6,
**characterized in that**
the switchover means (22) comprises an electronic unit (31) which is connectable to the vacuum pump or to the control electronics.

9. An arrangement in accordance with any one of the claims 6 to 8,
**characterized in that**
the magnetic bearing has a permanent magnet (14) which effects a pre-magnetization.

10. An arrangement in accordance with any one of the claims 6 to 9,
**characterized in that**
a status display means (23) is provided which displays the state of the changed pre-magnetizing current.

11. An arrangement in accordance with any one of the claims 6 to 10,
**characterized in that**
the vacuum pump has two active radial magnetic bearings, each comprising an electromagnet (10, 12) and a radial sensor (11, 13), and an axial magnetic bearing comprising an axial electromagnet (15) and an axial sensor (16).

## Revendications

1. Procédé pour faire fonctionner un agencement qui comprend une pompe à vide (1) comportant un rotor (7) et un palier magnétique actif, le palier magnétique présentant un électroaimant (10, 12, 15), et qui comprend une électronique de commande (20) pour le palier magnétique,
dans lequel
un courant de prémagnétisation du palier magnétique, qui traverse l'électroaimant est modifié en fonction de l'état de commutation d'un moyen de commutation (22) de manière à provoquer une réduction de la prémagnétisation,
**caractérisé en ce que**
le courant de prémagnétisation est modifié d'un montant qui dépend de la position de montage de la pompe à vide (1).

2. Procédé selon la revendication 1,
**caractérisé en ce que**
après une durée de temps présélectionnée, la prémagnétisation réduite auparavant est augmentée par modification du courant de prémagnétisation.

3. Procédé selon l'une des revendications précédentes,
**caractérisé en ce que**
le débattement du rotor (7) est surveillé par un capteur de position (11, 13, 16), et lors du dépassement d'une valeur limite du débattement, le courant de prémagnétisation est modifié de manière à augmenter la prémagnétisation.

4. Procédé selon l'une des revendications précédentes,
**caractérisé en ce que**
le courant de prémagnétisation est modifié sous la forme d'une fonction continue.

5. Procédé selon l'une des revendications précédentes,
**caractérisé en ce que**
le courant de prémagnétisation est modifié d'un montant qui, lors d'un agencement de l'axe du palier perpendiculaire à la direction de la pesanteur, est plus grand que lors d'un agencement parallèle.

6. Agencement comprenant une pompe à vide (1) dans laquelle est agencé au moins un palier magnétique actif qui présente un électroaimant (10, 12, 15) et un capteur de position (11, 13, 16),
dans lequel
le palier magnétique est en liaison avec une électronique de commande (20),
un moyen de commutation (22) destiné à influencer la prémagnétisation est relié à l'électronique de commande,
un courant de prémagnétisation du palier magnétique, qui traverse l'électroaimant (10, 12, 15) est modifiable en fonction de l'état de commutation du moyen de commutation (22), afin de provoquer une réduction de la prémagnétisation,
**caractérisé en ce que**
l'électronique de commande (20) modifie le courant de prémagnétisation d'un montant qui dépend de la position de montage de la pompe à vide (1).

7. Agencement selon la revendication 6,
**caractérisé en ce que**
le moyen de commutation (22) comprend un élément de commutation accessible sur le boîtier (21) de l'électronique de commande.

8. Agencement selon la revendication 6,
**caractérisé en ce que**
le moyen de commutation (22) comprend une unité électronique (31) qui est susceptible d'être reliée à la pompe à vide ou à l'électronique de commande.

9. Agencement selon l'une des revendications 6 à 8,
**caractérisé en ce que**
le palier magnétique comprend un aimant permanent (14) qui provoque une prémagnétisation.

10. Agencement selon l'une des revendications 6 à 9,
**caractérisé en ce que**
il est prévu un moyen d'affichage d'état (23) qui affiche l'état du courant de prémagnétisation modifié.

11. Agencement selon l'une des revendications 6 à 10,
**caractérisé en ce que**
la pompe à vide comprend deux paliers magnétiques actifs radiaux ayant chacun un électroaimant (10, 12) et un capteur radial (11, 13), et un palier magnétique axial ayant un électroaimant axial (15) et un capteur axial (16).
